## Europäisches Patentamt

## European Patent Office

## Office européen des brevets

(11) Veröffentlichungsnummer: **0 458 150 B1**

(19)

(12)

# EUROPÄISCHE PATENTSCHRIFT

(45) Veröffentlichungstag der Patentschrift: **30.11.94**

(51) Int. Cl.5: **C04B 35/54**

(21) Anmeldenummer: **91107663.6**

(22) Anmeldetag: **11.05.91**

(54) **Verfahren zur Herstellung von Formteilen.**

(30) Priorität: **24.05.90 DE 4016710**

(43) Veröffentlichungstag der Anmeldung:
**27.11.91 Patentblatt 91/48**

(45) Bekanntmachung des Hinweises auf die
Patenterteilung:
**30.11.94 Patentblatt 94/48**

(84) Benannte Vertragsstaaten:
**BE CH DE DK ES FR GB IT LI NL**

(56) Entgegenhaltungen:
**GB-A- 2 011 361**
**US-A- 3 333 941**

(73) Patentinhaber: **BAYER AG**

**D-51368 Leverkusen (DE)**

(72) Erfinder: **von Bonin, Wulf, Dr.**
**Droste-Hülshoff-Strasse 9**
**W-5068 Odenthal (DE)**
Erfinder: **von Gizycki, Ulrich, Dr.**
**Wiembachallee 24**
**W-5090 Leverkusen 3 (DE)**
Erfinder: **Krüger, Klaus, Dipl.-Ing.**
**Grometstrasse 15**
**W-5060 Bergisch Gladbach 1 (DE)**

## Beschreibung

Die vorliegende Erfindung betrifft ein Verfahren zur Herstellung von Formteilen aus blähfähigem Graphit.

Blähfähige Graphite sind Graphit-Verbindungen, die in die Zwischengitterschichten Blähfähigkeit vermittelnde, freizusetzende Komponenten eingelagert enthalten, z.B. $NO_x$ oder $SO_x$, Blähgraphite werden bisweilen auch als Graphitsalze bezeichnet. Sie können z.B. durch Behandlung von Graphit mit starken Säuren, z.B. rauchender Salpetersäure und/oder rauchender Schwefelsäure, hergestellt werden.

Blähfähige Graphite sind im Handel erhältlich. Sie weisen im allgemeinen Schüttgewichte um 600 g/l auf. Beim Erhitzen auf Temperaturen im allgemeinen oberhalb 150°C, besser oberhalb 200°C schäumen sie auf ein Vielfaches ihres Volumens auf, wobei z.B. $NO_x$ oder $SO_x$ unter Aufweitung der Schichtebenen austritt.

Will man aus Blähgraphit Formkörper in einer mehr oder weniger geschlossenen Form herstellen, so füllt man z.B. schuppiges Blähgraphitpulver in die Form und erhitzt dann, wobei der auftreibende Graphit die Form ausfüllt und sich in ihr verdichtet. Hierbei zeigt sich, daß bereits einfache, insbesondere aber kompliziertere Formen nicht gleichmäßig vom expandierenden Blähgraphit ausgefüllt werden. An den zentralen Stellen, an denen sich zu Beginn der Verschäumung der Blähgraphit befand, sind Dichte und Druckfestigkeit des gebildeten Formteils hoch, an peripheren Bereichen dagegen niedrig, weil sich der expandierende Graphit nur schwierig in periphere Bereiche hineindrückt.

Es wurde nun ein Verfahren zur Herstellung von Formteilen durch Erhitzen von Blähgraphitpulver in Formen gefunden, das dadurch gekennzeichnet ist, daß man zunächst Blähgraphitpulver durch kontrolliertes Erhitzen auf Temperaturen zwischen 140 und 450°C vorexpandieren läßt bis ein Schüttgewicht von 30 bis 500 g/l erreicht ist, die Formen zu mindestens 50 Vol.-% mit derartig vorexpandiertem Blähgraphit füllt und dann durch Erhitzen auf Temperaturen im Bereich 300 bis 700°C die Expansion des Blähgraphits zu Ende führt.

Als Blähgraphitpulver kommt beispielsweise $SO_x$- oder $NO_x$-Blähgraphit oder Mischungen davon in Frage. Das Blähgraphitpulver kann beispielsweise in Form von Schuppen vorliegen, die beispielsweise einen mittleren Flächendurchmesser von mindestens 0,1 mm aufweisen. Vorzugsweise beträgt dieser Flächendurchmesser 0,2 bis 5 mm, insbesondere 0,5 bis 3 mm. Blähgraphitpulver mit größeren Partikeldurchmessern als 5 mm sind bei Formen mit relativ großen lichten Weiten durchaus auch geeignet, Blähgraphitpulver mit geringeren Durchmessern als 0,1 mm sind im allgemeinen weniger blähaktiv.

Vorzugsweise wird das Blähgraphitpulver im Gemisch mit mindestens einem Bindemittel eingesetzt. Das oder die Bindemittel können dem Blähgraphit vor oder nach der Vorexpansion zugemischt werden. Vorzugsweise mischt man Bindemittel vor der Vorexpansion zu.

Als Bindemittel kommen beispielsweise Teere, Bitumen oder organische Polymere und vorzugsweise Phosphorsäurespender in Frage, insbesondere Aminphosphate, saure Metallphosphate, Aminphosphonate und saure Metallphosphonate, die unter Aufschäumen bei 150 bis 600°C schmelzen. Besonders bevorzugt sind sekundäres Ammoniumphosphat, Ethylendiaminphosphat, Aluminiummethylphosphonat, Calciummethylphosphonat, Magnesiummethylphosphonat und Zinkmethylphosphonat. Es können auch Gemische verschiedener Bindemittel eingesetzt werden.

Bindemittel können z.B. in Mengen von 0 bis 85 Gew.-%, bezogen auf fertige Formteile, eingesetzt werden. Vorzugsweise beträgt diese Menge 5 bis 35 Gew.-%.

Der Blähgraphit kann, gegebenenfalls zusätzlich zu Bindemitteln, auch in Kombination mit Füllstoffen, Kohlenstoffasern und/oder Mineralfasern eingesetzt werden.

Bevorzugte Temperaturen für die Vorexpansion liegen zwischen 160 und 350°C. Die Vorexpansion wird solange durchgeführt, bis der Blähgraphit ein Schüttgewicht zwischen 30 und 500 g/l, vorzugsweise zwischen 40 und 250 g/l, besonders bevorzugt zwischen 50 und 150 g/l aufweist.

Die Formen zur Herstellung der Formteile werden vorzugsweise zu 75 bis 100 Vol.-% mit dem vorexpandierten Blähgraphit, gegebenenfalls zusammen mit den beschriebenen Bindemitteln und/oder Zusatzstoffen gefüllt.

Bei den Formen handelt es sich vorzugsweise um weitgehend geschlossene oder weitgehend verschließbare Formen, d.h. um Formen, die beim Zuendeführen des Blähens des Blähgraphits ihre Geometrie nicht oder nur unwesentlich ändern, jedoch nicht gasdicht sind.

Die Fertigstellung der Formteile erfolgt durch Erhitzen der mit vorexpandiertem Blähgraphit und gegebenenfalls Bindemitteln und/oder Zusatzstoffen zu mindestens 50 Vol.-% gefüllten Formen auf Temperaturen zwischen 300 und 700°C. Bevorzugt sind hier Temperaturen zwischen 450 und 600°C. Die Wärme kann dabei auf verschiedene Weise zugeführt werden, beispielsweise durch Beheizung der Form von außen, durch Induktion, durch Durchleiten von Heizgas, durch Strahlung oder durch die Einwirkung von Mikrowellen.

Die Vorexpansion des gegebenenfalls Bindemittel und/oder Zusatzstoffe enthaltenden Blähgraphits kann ebenfalls in der Form durchgeführt werden, vorzugsweise erfolgt sie jedoch außerhalb davon, z.B. in einem Ofen oder Wirbelbett, wobei das Erwärmen beispielsweise durch Wärmeleitung, Einleiten von Heizgasen, Mikrowellen, Hochfrequenzfelder, Induktion oder Strahlung erfolgen kann.

Der vorexpandierte Blähgraphit kann gewünschtenfalls längere Zeit zwischengelagert werden, bevor mit ihm Formteile hergestellt werden.

Erfindungsgemäß hergestellte Formteile sind duktil, haben ein niedriges Raumgewicht, gute Leitfähigkeit für Wärme und elektrischen Strom, gute Wärmebeständigkeit (z.B. bis über 1500°C) und können gegebenenfalls schwer oxidierbar ausgerüstet werden, z.B. mit phosphorhaltigen Bindemitteln. Das spezifische Gewicht der erfindungsgemäß erhältlichen duktilen Formkörper, die z.B. als Platten, Profile, Halbschalen, Rohre, Schallschutzelemente oder Formteile mit komplizierterer Geometrie hergestellt werden können, liegt im allgemeinen zwischen 0,02 und 0,5 g/cm$^3$, vorzugsweise zwischen 0,05 und 0,4 g/cm$^3$, insbesondere zwischen 0,08 und 0,3 g/cm$^3$. Das spezifische Gewicht der Formteile kann z.B. variiert werden durch mehr oder weniger vollständige Füllung der jeweiligen Form mit vorexpandiertem Blähgraphit enthaltendem Material und/oder durch Variation des Schüttgewichts dieses Materials. Bei hohen Schüttgewichten des vorexpandierten Blähgraphit-Materials werden hohe spezifische Gewichte der fertigen Formkörper erhalten.

Überraschenderweise sind erfindungsgemäß hergestellte Formteile hinsichtlich Dichte und Druckfestigkeit weitgehend homogen. Auch kompliziertere Formen werden gleichmäßig mit expandiertem Blähgraphit ausgefüllt. Weiterhin ist überraschend, daß vorexpandierte Blähgraphite beim Nacherhitzen in der Form noch einen festen Verbund und damit gute Formteilfestigkeiten erbringen können. Es war auch überraschend, daß die vorexpandierten Formfüllungen eine ausreichende Warmeleitung im Inneren besitzen um homogen nachexpandieren zu können, selbst wenn die Form nur von außen beheizt wird. Schließlich war überraschend, daß einmal vorexpandierter Blähgraphit auch noch nach längerem Lagern blähfähig ist, obwohl seine Gitterebenen bei der Vorexpansion bereits aufgeweitet wurden und so zu vermuten war, daß die treibenden Gase während der Lagerung verloren gehen.

Erfindungsgemäß hergestellte Formteile können beispielsweise Anwendung finden auf Gebieten, wo wenig brennbare mechanische, thermische oder elektromagnetische Abschirmungen, Schallschutzelemente, Bodenheizungselemente, sonstige Beheizungselemente mit guter Wärmeleitfähigkeit bei geringem Gewicht oder Brandbarrieren erforderlich sind, z.B. im Motorenbau, im Raketenbau, im Karosseriebau, Heizanlagenbau und in der Weltraumtechnik.

### Beispiele

#### Beispiel 1 (zum Vergleich):

Es wurde eine Form aus Stahlblech für eine Rohrhalbschale mit einer Wandstärke von 1 cm und einem Volumen von 1000 ml verwendet. Als Blähgraphit wurde ein handelsüblicher $NO_x$-Blähgraphit eingesetzt. Der Blähgraphit wurde mit einer wäßrigen Lösung des Salzes aus einem Mol Aluminiumhydroxid und 3 Molen Methylphosphonsäure imprägniert und bei 120°C getrocknet. Danach enthielt das Blähgraphitmaterial 30 Gew.-% des Phosphonats. Es wurde zu einem Granulat mit einem mittleren Korndurchmesser von 3 mm vermahlen.

In die liegende Halbschalenform, die mit Aluminiumfolie ausgekleidet war, wurden 100 g des Granulats eingebracht und entlang der mittigen Mantellinie des Halbzylinders gleichmäßig verteilt. Dann wurde die Form in einen auf 600°C vorgeheizten Ofen gebracht, nach 30 Minuten Temperierung bei 600°C dem Ofen entnommen und abgekühlt.

Es hatte sich ein Formkörper gebildet, der die Form lediglich zu ca. 65 Vol.-% ausfüllte. Der Füllung war es nicht gelungen durch Expansion beidseitig der Mantellinie des Halbzylinders der Form vollständig aufzusteigen und die Form ganz zu füllen. Der gebildete unvollständige Halbzylinder (Rohrhalbschale) hatte entlang der mittigen Mantellinie wesentlich höhere Dichten und Festigkeiten als an den Rändern.

#### Beispiel 2

Das auch in Beispiel 1 eingesetzte imprägnierte, getrocknete und vermahlene Blähgraphitmaterial wurde zunächst in einem offenen Topf bei schwacher Bewegung solange auf 200°C erhitzt, bis es ein Schüttgewicht von 100 g/l aufwies. 100 g des so vorexpandierten Materials wurden dann in die senkrecht stehende Halbschalenform, die auch in Beispiel 1 verwendet wurde, unter Rütteln eingefüllt, wobei die Form völlig ausgefüllt wurde. Dann wurde die Form im vorgeheizten Ofen 30 Minuten lang auf 600°C erhitzt. Nach dem Abkühlen wurde der Form eine gleichmäßig ausgebildete und vollständige Rohrhalbschale entnommen. Die Wärmedurchgangszahl des Materials lag bei 7 W/K · m, das Raumgewicht bei 0,1 g/cm$^3$, und die Eindruckfestigkeit bei 20 kg/cm$^2$. Die Brandklasse wurde gemäß DIN 4102 mit A2 bestimmt, die Rauchgasdichte gemäß Spezifikation ATS-1000.001, 1984, mit Null. Die Schirmdämpfung entsprechend Spezifikation NSA No. 65-6 und US Mil-Std. 285 lag im S-Band sowie im X-Band über 80 db.

## Beispiel 3

Es wurde wie in Beispiel 2 gearbeitet, jedoch mit Blähgraphitmaterial, das bei 188°C auf ein Schüttgewicht von 200 g/l vorexpandiert worden war. Es wurde eine sehr stabile, homogen wirkende Rohrhalbschale erhalten, die ein Raumgewicht von ca. 0,2 g/cm$^3$ besaß.

## Beispiel 4

Es wurde wie in Beispiel 2 gearbeitet, jedoch wurde ein handelsüblicher $SO_x$-Blähgraphit eingesetzt, der mit 20 Gew.-% eines Phosphats imprägniert wurde, das durch Neutralisation einer wäßrigen Losung von Ethylendiamin mit Orthophosphorsäure erhalten worden war. Diese Blähgraphitkombination wurde bei 220°C auf ein Schüttgewicht von 100 g/l vorexpandiert. Es wurde eine mechanisch homogen erscheinende Rohrhalbschale erhalten.

## Beispiel 5

Ein Gemisch von bei 300°C vorexpandiertem $SO_x$- und $NO_x$-Blähgraphit (Gewichtsverhältnis 1:1; Schüttgewicht 80 g/l) wurde mit fein vermahlenem sekundärem Ammoniumphosphat im Gewichtsverhältnis 7:3 gut vermischt. 125 g dieser Mischung wurde in die auch in Beispiel 1 verwendete Form eingefüllt. Dann wurde die Form 30 Minuten auf 600°C erhitzt. Es wurde ein homogen wirkender Formkörper erhalten, der eine Dichte von 0,11 g/cm$^3$ aufwies.

## Beispiel 6

Handelsüblicher $NO_x$-Blähgraphit wurde bei 330°C vorexpandiert bis er ein Schüttgewicht von 50 g/l aufwies. Mit diesem Material wurde eine mit Schreibpapier ausgekleidete Form entsprechend Beispiel 1 gefüllt und durch Erhitzen der Form für 50 Minuten auf 600°C ein Formkörper hergestellt. Es wurde eine sehr leichte Rohrhalbschale mit einer Eindruckfestigkeit von 8 kg/cm$^2$ und einem Raumgewicht von 0,05 g/cm$^3$ erhalten.

Halbschalen, wie sie gemäß den Beispielen 2 bis 6 erhalten wurden, können zur Abdeckung von Auspuffrohren verwendet werden.

## Beispiel 7

Ein Glasrohr aus Borsilikat-Geräteglas mit einer inneren Weite von 2,5 cm wurde mit einem Gemisch aus 10 Gew.-% Talkumpuder und 90 Gew.-% einer 1 %igen Carboxymethylcellulose-Lösung in Wasser innenseitig beschichtet und gut getrocknet. Diese Beschichtung diente als Trennmittel.

Dann wurde das 25 cm lange Rohr mit auf ein Schüttgewicht von 90 g/l vorexpandiertem $NO_x$-Blähgraphit gefüllt, beidseitig mit einer Glasfritte verschlossen und 5 Minuten in einen üblichen, auf volle Leistung geschalteten 600 Watt-Mikrowellenherd gebracht. Nach dem Abkühlen wurde aus dem Glasrohr ein kompakter Stempel aus expandiertem und verdichtetem Blähgraphit herausgedrückt. Der gebildete Stempel hatte ein Raumgewicht von 0,095 g/cm$^3$ und eine Eindruckfestigkeit von 12 kg/cm$^2$.

Hier, wie in allen anderen angegebenen Fällen, wurde die Eindruckfestigkeit bestimmt, indem auf den Werkstoffkörper ein planer Zylinder mit einer Bodenfläche von 0,25 cm$^2$ gestellt und die Belastung in Gramm gemessen wurde, die erforderlich war, um den Zylinder 5 mm tief in den Werkstoff hineinzudrücken. Durch Umrechnung wurde der entsprechende Wert in kg/cm$^2$ erhalten.

## Beispiel 8

Es wurde eine stählerne Plattenform verwendet, die gestattete, Platten mit einer Dicke von 2,5 cm herzustellen. Das Füllvolumen der Form wurde mit einem auf 110 g/l Schüttgewicht vorexpandierten, sonst wie im Beispiel 2 verwendeten Blähgraphitmaterial bündig gefüllt und verschlossen. Anschließend wurde die Form in einem Induktionsofen 15 Minuten auf 600°C erhitzt. Nach dem Abkühlen wurde eine Platte mit einer homogenen Dichteverteilung entnommen, die 0,1 ± 0,02 g/cm$^3$ betrug.

## Beispiel 9

6 Gew.-Teile handelsüblicher $NO_x$-Blähgraphit wurden mit 1 Gew.-Teilen Glasfasern (handelsübliche "milled fibers") und 3 Gew.-Teilen eines Salzes aus 1 Mol Aluminiumhydroxid und 3 Molen Orthophosphorsäure und 1 Gew.-Teil Hydrargillith gut vermischt. Dann wurde die Mischung mit Wasser zu einem knetbaren Brei angeteigt. Nach gutem Verkneten wurde der Brei bei 50°C getrocknet und zu Teilchen mit einer Korngröße von ca. 3 mm Durchmesser zerkleinert. Dieses Granulat wurde bei 200°C auf ein Schüttgewicht von 140 g/l vorexpandiert und dann in einer Form gemäß Beispiel 1 durch Erhitzen auf 600°C eine Rohrhalbschale hergestellt. Die Rohrhalbschale war mechanisch sehr stabil und hatte eine durchschnittliche homogen verteilte Dichte von 0,13 g/cm$^3$.

## Patentansprüche

1. Verfahren zur Herstellung von Formteilen durch Erhitzen von Blähgraphitpulver in Formen, dadurch gekennzeichnet, daß man zunächst Blähgraphitpulver durch kontrolliertes Erhitzen auf Temperaturen zwischen 140 und 450°C vorexpandieren läßt bis ein Schüttgewicht von 30 bis 500 g/l erreicht ist, die Form zu mindestens 50 Vol.-% mit derartig vorexpandiertem Blähgraphit füllt und dann durch Erhitzen auf Temperaturen im Bereich 300 bis 700°C die Expansion des Blähgraphits zu Ende führt.

2. Verfahren nach Anspruch 1, dadurch gekennzeichnet, daß man als Blähgraphitpulver $SO_x$- oder $NO_x$-Blähgraphit oder Mischungen davon in Form von Schuppen mit einem mittleren Flächendurchmesser von mindestens 0,1 mm einsetzt.

3. Verfahren nach Ansprüchen 1 und 2, dadurch gekennzeichnet, daß man das Blähgraphitpulver im Gemisch mit mindestens einem Bindemittel einsetzt.

4. Verfahren nach Anspruch 3, dadurch gekennzeichnet, daß man als Bindemittel Phosphorsäurespender einsetzt.

5. Verfahren nach Ansprüchen 3 und 4, dadurch gekennzeichnet, daß man 0 bis 85 Gew.-% Bindemittel, bezogen auf fertige Formteile, einsetzt.

6. Verfahren nach Ansprüchen 1 bis 5, dadurch gekennzeichnet, daß man Blähgraphit in Kombination mit Füllstoffen, Kohlenstoffasern und/oder Mineralfasern einsetzt.

7. Verfahren nach Ansprüchen 1 bis 6, dadurch gekennzeichnet, daß man die Formen zur Herstellung der Formteile zu 75 bis 100 Vol.-% mit vorexpandiertem Blähgraphit füllt.

8. Verfahren nach Ansprüchen 1 bis 7, dadurch gekennzeichnet, daß man die Vorexpansion bei 160 bis 350°C und die Herstellung der Formteile bei 450 bis 600°C durchführt.

## Claims

1. Process for the production of shaped articles by heating expandable graphite powder in moulds, characterized in that expandable graphite powder is first allowed to pre-expand, by controlled heating to temperatures of between 140 and 450°C, until a bulk density of 30 to 500 g/l is reached, the mould is filled to the extent of at least 50% by volume with expandable graphite preexpanded in this way, and expansion of the expandable graphite is then brought to completion by heating to temperatures in the range from 300 to 700°C.

2. Process according to Claim 1, characterized in that $SO_x$- or $NO_x$-expandable graphite or mixtures thereof in the form of flakes having an average surface diameter of at least 0.1 mm is employed as the expandable graphite powder.

3. Process according to Claims 1 and 2, characterized in that the expandable graphite powder is employed as a mixture with at least one binder.

4. Process according to Claim 3, characterized in that a phosphoric acid donor is employed as the binder.

5. Process according to Claims 3 and 4, characterized in that 0 to 85% by weight of binder, based on the finished shaped articles, is employed.

6. Process according to Claims 1 to 5, characterized in that expandable graphite is employed in combination with fillers, carbon fibres and/or mineral fibres.

7. Process according to Claims 1 to 6, characterized in that the moulds are filled to the extent of 75 to 100% by volume with pre-expanded expandable graphite for production of the shaped articles.

8. Process according to Claims 1 to 7, characterized in that the pre-expansion is carried out at 160 to 350°C and the production of the shaped articles is carried out at 450 to 600°C.

## Revendications

1. Procédé de fabrication de pièces moulées par chauffage de poudre de graphite expansible dans des moules, caractérisé en ce qu'on pré-expanse tout d'abord la poudre de graphite expansible par chauffage contrôlé à des températures comprises entre 140 et 450°C jusqu'à l'obtention d'une masse volumique apparente comprise entre 30 et 500 g/l, qu'on emplit le moule à au moins 50 % de son volume de graphite expansible ainsi pré-expansé et qu'on termine ensuite l'expansion du graphite expansible par chauffage à des températures de l'ordre de 300 à 700°C.

2. Procédé selon la revendication 1, caractérisé en ce qu'on utilise comme poudre de graphite expansible du graphite expansible-$SO_x$ ou du graphite expansible-$NO_x$ ou leurs mélanges

sous forme d'écailles ayant un diamètre moyen d'au moins 0,1 mm.

3. Procédé selon les revendications 1 et 2, caractérisé en ce qu'on utilise la poudre de graphite expansible en mélange avec au moins un liant.

4. Procédé selon la revendication 3, caractérisé en ce qu'on utilise un donneur d'acide phosphorique comme liant.

5. Procédé selon les revendications 3 et 4, caractérisé en ce qu'on utilise 0 à 85 % en poids de liant, par rapport aux pièces moulées finies.

6. Procédé selon les revendications 1 à 5, caractérisé en ce qu'on utilise du graphite expansible en combinaison avec des charges, des fibres de carbone et/ou des fibres minérales.

7. Procédé selon les revendications 1 à 6, caractérisé en ce qu'on emplit les moules destinés à la fabrication des pièces moulées à 75 à 100 % de leur volume de graphite expansible pré-expansé.

8. Procédé selon les revendications 1 à 7, caractérisé en ce qu'on procède à la pré-expansion entre 160 et 350°C et à la fabrication des pièces moulées entre 450 et 600°C.